# EUROPEAN PATENT SPECIFICATION

(11) **EP 1 369 026 B1**
(45) Date of publication and mention of the grant of the patent: **13.08.2008**
(21) Application number: 03076274.4
(22) Date of filing: 01.05.2003
(51) Int. Cl.: A01D 75/20, A01B 69/00

(54) **An agricultural machine for performing an agricultural operation, in particular crop processing**
Landwirtschaftliche Maschine zur Behandlung von Erntegut
Machine agricole pour le traitement de récolte

(30) Priority: 06.06.2002 NL 1020794
(43) Date of publication of application: 10.12.2003
(73) Proprietor: Lely Enterprises AG, 6300 ZUG (CH)
(72) Inventor: Van den Berg, Karel, 2971 BR Bleskensgraaf (NL); Miedema, Theo Jan, 2676 VB Maasdijk (NL)
(74) Representative: Corten, Maurice Jean F.M.

(56) References cited:
- EP-A- 0 628 239
- CH-A- 674 440
- DE-U- 29 719 035
- NL-A- 9 002 867
- US-A- 3 548 966
- US-A- 4 323 136
- US-A- 4 354 339
- US-A- 4 546 840
- US-A- 4 747 255
- US-A- 5 727 371
- PATENT ABSTRACTS OF JAPAN vol. 2000, no. 10, 17 November 2000 (2000-11-17) & JP 2000 188919 A (KOMATSU ZENOAH CO), 11 July 2000 (2000-07-11)

## Description

The invention relates to an agricultural machine for performing an agricultural operation, in particular crop processing, which agricultural machine is displaceable over an agricultural parcel, the agricultural machine being provided with a movable agricultural device for performing the agricultural operation.

Such an agricultural machine is generally known. A drawback of such a known agricultural machine is that the driver of the agricultural machine is principally responsible for the safety of the environment, in particular the safety of human beings and animals. When observing (possible) danger for the safety of the environment, the driver should activate, on the one hand, an emergency stop that stops the agricultural operation and should operate, on the other hand, the brakes of the tractor, so as to prevent damage or injury.

US-4.546.840 discloses a moving machine vehicle with a vertically movable mowing device. The vehicle comprises a contact sensor which forms a bumper. When the contact sensor detects an obstacle, a speed change lever is unconditionally reset to a neutral position or vehicle traveling stop position, thereby to stop the traveling of the vehicle.

The present invention aims inter alia at providing an agricultural machine for performing an agricultural operation, in particular crop processing, which machine comprises an improved safety-system.

For this purpose, according to the invention an agricultural machine of the above-described type is characterized in that the agricultural machine is provided with a detecting element for detecting a force acting on the detecting element and for emitting a detection signal depending on the detected force, with a protecting element for protecting the moving agricultural device, and with a displacing element for displacing, in dependence on the detection signal, the agricultural device and the protecting element relative to each other. Due to the fact that a detecting element is used for operating the protecting element for protecting the movable agricultural device, in comparison with the known agricultural machine, the time between detecting a (possible) danger for the environment and protecting the agricultural device is shortened.

The invention can in particular be applied if the agricultural machine is an autonomous agricultural machine, i.e. an agricultural machine that does not require a driver for being moved.

In an embodiment of an agricultural machine according to the invention, the displacing element is suitable for bringing the protecting element into an active position in which the protecting element protects the movable agricultural device if the detection signal indicates that an object pushes against the detecting element, and for bringing the protecting element into an inactive position in which the protecting element releases the movable agricultural device if the detection signal indicates that the detecting element is not contacted.

In an alternative embodiment of an agricultural machine according to the invention, the displacing element is suitable for bringing the agricultural device into an active position in which the protecting element protects the movable agricultural device if the detection signal indicates that an object pushes against the detecting element and for bringing the agricultural device into an inactive position in which the protecting element releases the movable agricultural device if the detection signal indicates that the detecting element is not contacted.

As the weight to be displaced may be considerable, it is advantageous if the displacing element is a hydraulic displacing element.

In an embodiment of an agricultural machine according to the invention the detecting element comprises a mechanical detecting device.

In an embodiment of an agricultural machine according to the invention the mechanical detecting device comprises a comb. Alternatively or additionally, the mechanical detecting device comprises a roll with feelers. Alternatively or additionally, the mechanical detecting device comprises a bracket with feelers. Alternatively or additionally, the mechanical detecting device comprises an arm with a feeler. As feelers pressure-sensors known per se may be used for example.

In an embodiment of an agricultural machine according to the invention, the mechanical detecting device is pivotably disposed on the agricultural machine. Here it is possible to emit a signal for operating the stopping element in dependence on the degree of pivoting.

In an embodiment of an agricultural machine according to the invention, the mechanical detecting element is movably disposed on the agricultural machine. The agricultural machine comprises in particular a direction-of-travel-determining element for determining the direction of travel of the agricultural machine, the mechanical detecting device being movable with the aid of data from the direction-of-travel-determining element.

The invention will be explained hereinafter in further detail with reference to the embodiments shown in the drawing, in which:

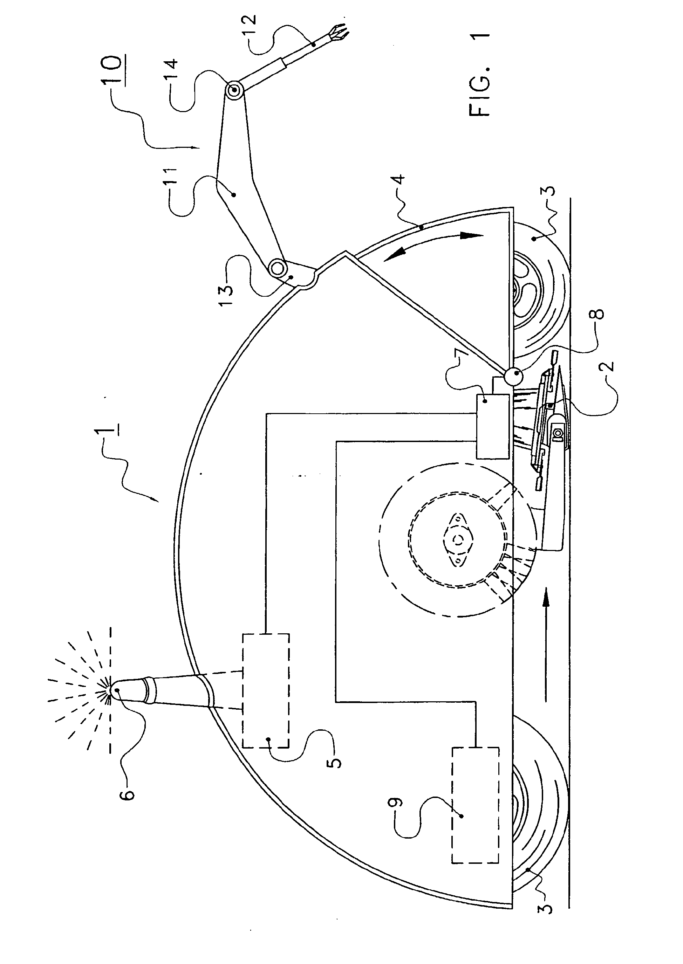

Figure 1 shows schematically in side view an autonomous agricultural machine in an embodiment of the invention.

Figure 1 shows schematically in side view an autonomous agricultural machine 1 in an embodiment of the invention. Although the invention will be described with reference to an autonomous agricultural machine, it will be obvious that the invention is not limited thereto. It is pointed out here that an autonomous machine, i.e. a machine that does not require a driver for being moved, but moves with the aid of inter alia a position-determining system, is known per se and will not be set out here in further detail for the sake of simplicity of the description. The autonomous agricultural machine 1 is suitable for performing an agricultural operation, in particular crop-processing, on a crop that is present on an agricultural parcel. In the embodiment shown the autonomous agricultural machine 1 is an autonomous mowing machine that mows crop that is present on the agricultural parcel by means of a mowing unit 2. Although several sorts of mowing units known per se may be used, in the embodiment shown the mowing unit 2 is constituted by mowing discs that are present on a cutter bar and are rotatable about an axis, which mowing discs are provided with mowing knives. It will be obvious that the agricultural machine may also be an agricultural machine for performing other crop-processing operations.

The agricultural machine 1 is supported and displaced over the agricultural parcel by means of wheels 3. The autonomous agricultural machine 1 further comprises a mechanical protecting element 4, in the embodiment shown constituted by a cap, for protecting the movable agricultural device, in the embodiment shown the mowing unit 2. The agricultural machine further comprises a displacing element 7 for displacing the mowing unit 2 and the protective cap 4 relative to each other. In the embodiment shown, the displacement of the protective cap 4 takes place for example by rotation of the cap 4 about an axis of rotation 8. Here the displacing element 7 is preferably a hydraulic displacing element. It is pointed out that the invention is described with reference to an exemplary embodiment in which the protecting element is displaced relative to the agricultural device, but it will be obvious that a displacement of the agricultural device relative to a stationary protecting element can also be applied within the scope of the invention.

The agricultural machine further comprises a position-determining element 5, in the embodiment shown provided with an aerial 6, for determining the position of the autonomous agricultural machine 1 in the agricultural parcel by means of for example a GPS-system. The position-determining element 5 may also function as direction-of-travel-determining element for determining the direction of travel of the agricultural machine.

In the embodiment shown in Figure 1, the agricultural machine comprises a mechanical detecting device 10 constituted by an arm 11 that comprises a feeler 12. The arm 10 is rotatably disposed on the agricultural machine 1 via an axis 13. It is pointed out here that also other ways of movably disposing the detecting device on the agricultural machine are possible. The feeler 12 is further pivotably disposed relative to the arm 11 by means of a pivot axis 14. When the agricultural machine 1 is moving in the direction of an object, by which in the scope of the invention also a living being such as a human being is meant, the feeler 12 touches the human being at a given moment, as a result of which a pivoting movement in the pivot axis 14 and/or a rotation about the axis of rotation 13 occur(s). The degree of pivoting and/or rotation is a measure for the force exercised on the mechanical detecting device 10. A signal whose magnitude corresponds to the degree of pivoting is transmitted to the displacing element 7 which, in dependence on the magnitude of the signal, can interrupt the drive 9 of the wheels 3 for stopping the movement of the agricultural machine 1; if desired, the drive of the mowing unit 2 is interrupted as well. Anyhow the protective cap 4 is brought by the displacing element 7 into the protecting, i.e. the active position.

Depending on the direction of travel as determined by the direction-of-travel-determining element, the arm 11 can be rotated about the axis 13 in such a manner that said arm is positioned in the direction of travel for the purpose of correctly detecting objects.

The operation of the mechanical detecting device 10 can be checked regularly by colliding at a low speed with a known object in order to detect the reaction of the mechanical detecting device.

It will be obvious that the invention is not limited to the above-described embodiments. The mechanical detecting device may comprise for example a comb, a roll with feelers, or a bracket with feelers. The mechanical protecting element may further comprise for example other means, such as a box, a hatch, a canvas, a rolling door, an air bag of the like. As detecting device is further described a mechanical detecting element, but it will be obvious that electronic or electromagnetic detecting means can also be applied in the invention.

## Claims

1. An agricultural machine (1) for performing an agricultural operation, in particular crop processing, the agricultural machine being provided with a movable agricultural device (2) for performing the agricultural operation, **characterized in that** the agricultural machine is provided with a detecting element (10) for detecting a force acting on the detecting element and for emitting a detection signal depending on the detected force, with a protecting element (4) for protecting the moving agricultural device, and with a displacing element (7) for displacing, in dependence on the detection signal, the agricultural device (2) and the protecting element relative to each other.

2. An agricultural machine as claimed in claim 1, **characterized in that** the agricultural machine is an autonomous agricultural machine (1).

3. An agricultural machine (11) as claimed in claim 1 or 2, **characterized in that** the displacing element brings the protecting element (4) into an active position in which the protecting element protects the movable agricultural device (2) if the detection signal indicates that an object pushes against the detecting element (10), and **in that** the displacing element (7) brings the protecting element into an inactive position in which the protecting element releases the movable agricultural device (2) if the detection signal indicates that the detecting element is not contacted.

4. An agricultural machine (11) as claimed in claim 1 or 2, **characterized in that** the displacing element (7) brings the agricultural device (2) into an active position in which the protecting element (4) protects the movable agricultural device if the detection signal indicates that an object pushes against the detecting element (10), and **in that** the displacing element (7) brings the agricultural device (2) into an inactive position in which the protecting element releases the movable agricultural device if the detection signal indicates that the detecting element is not contacted.

5. An agricultural machine (1) as claimed in any one of the preceding claims, **characterized in that** the displacing element is a hydraulic displacing element (7).

6. An agricultural machine (1) as claimed in any one of the preceding claims, **characterized in that** the detecting element comprises a mechanical detecting device (10).

7. An agricultural machine (11) as claimed in claim 6, **characterized in that** the mechanical detecting device (10) comprises a comb.

8. An agricultural machine (1) as claimed in claim 6 or 7, **characterized in that** the mechanical detecting device (10) comprises a roll with feelers.

9. An agricultural machine (1) as claimed in claim 6, 7 or 8, **characterized in that** the mechanical detecting device (10) comprises a bracket with feelers.

10. An agricultural machine (1) as claimed in any one of claims 6 to 9, **characterized in that** the mechanical detecting device (10) comprises an arm with a feeler (12).

11. An agricultural machine (1) as claimed in any one of claims 6 to 10, **characterized in that** the mechanical detecting device (10) is movably disposed on the agricultural machine.

12. An agricultural machine as claimed in any one of claims 6 to 11, **characterized in that** the mechanical detecting device (10) is pivotably disposed on the agricultural machine.

13. An agricultural machine (1) as claimed in any one of the preceding claims, **characterized in that** the agricultural machine comprises a direction-of-travel-determining element (5) for determining the direction of travel of the agricultural machine.

14. An agricultural machine as claimed in claims 11 and 13, **characterized in that** the mechanical detecting device (10) is movable with the aid of data from the direction-of-travel-determining element (5).

## Patentansprüche

1. Landwirtschaftliche Maschine (1) zum Durchführen einer landwirtschaftlichen Arbeit, insbesondere einer Gutaufbereitung, wobei die landwirtschaftliche Maschine mit einer beweglichen landwirtschaftlichen Vorrichtung (2) zum Durchführen der landwirtschaftlichen Arbeit versehen ist,
**dadurch gekennzeichnet, dass** die landwirtschaftliche Maschine versehen ist mit einem Detektionselement (10), um eine auf das Detektionselement wirkende Kraft zu detektieren und ein Detektionssignal in Abhängigkeit von der detektierten Kraft auszugeben, mit einem Schutzelement (4) zum Schützen der beweglichen landwirtschaftlichen Vorrichtung und mit einem Verlagerungselement (7), um in Abhängigkeit von dem Detektionssignal die landwirtschaftliche Vorrichtung (2) und das Schutzelement relativ zueinander zu verlagern.

2. Landwirtschaftliche Maschine nach Anspruch 1,
**dadurch gekennzeichnet, dass** die landwirtschaftliche Maschine eine autonome landwirtschaftliche Maschine (1) ist.

3. Landwirtschaftliche Maschine (1) nach Anspruch 1 oder 2,
**dadurch gekennzeichnet, dass** das Verlagerungselement das Schutzelement (4) in eine aktive Position bewegt, in der das Schutzelement die bewegliche landwirtschaftliche Vorrichtung (2) schützt, wenn das Detektionssignal anzeigt, dass ein Objekt gegen das Detektionselement (10) drückt, und dass das Verlagerungselement (7) das Schutzelement in eine inaktive Position bewegt, in der das Schutzelement die bewegliche landwirtschaftliche Vorrichtung (2) freigibt, wenn das Detektionssignal anzeigt, dass das Detektionselement nicht berührt wird.

4. Landwirtschaftliche Maschine (1) nach Anspruch 1 oder 2,
**dadurch gekennzeichnet, dass** das Verlagerungselement (7) die landwirtschaftliche Vorrichtung (2) in eine aktive Position bewegt, in der das Schutzelement (4) die bewegliche landwirtschaftliche Vorrichtung schützt, wenn das Detektionssignal anzeigt, dass ein Objekt gegen das Detektionselement (10) drückt, und dass das Verlagerungselement (7) die landwirtschaftliche Vorrichtung (2) in eine inaktive Position bewegt, in der das Schutzelement die bewegliche landwirtschaftliche Vorrichtung freigibt, wenn das Detektionssignal anzeigt, dass das Detektionselement nicht berührt wird.

5. Landwirtschaftliche Maschine (1) nach einem der vorhergehenden Ansprüche,
**dadurch gekennzeichnet, dass** das Verlagerungselement ein hydraulisches Verlagerungselement (7) ist.

6. Landwirtschaftliche Maschine (1) nach einem der vorhergehenden Ansprüche,
**dadurch gekennzeichnet, dass** das Detektionselement eine mechanische Detektionsvorrichtung (10) umfasst.

7. Landwirtschaftliche Maschine (1) nach Anspruch 6,
**dadurch gekennzeichnet, dass** die mechanische Detektionsvorrichtung (10) einen Kamm umfasst.

8. Landwirtschaftliche Maschine (1) nach Anspruch 6 oder 7,
**dadurch gekennzeichnet, dass** die mechanische Detektionsvorrichtung (10) eine Rolle mit Fühlern umfasst.

9. Landwirtschaftliche Maschine (1) nach Anspruch 6, 7 oder 8,
**dadurch gekennzeichnet, dass** die mechanische Detektionsvorrichtung (10) einen Bügel mit Fühlern umfasst.

10. Landwirtschaftliche Maschine (1) nach einem der Ansprüche 6 bis 9,
**dadurch gekennzeichnet, dass** die mechanische Detektionsvorrichtung (10) einen Arm mit einem Fühler (12) umfasst.

11. Landwirtschaftliche Maschine (1) nach einem der Ansprüche 6 bis 10,
**dadurch gekennzeichnet, dass** die mechanische Detektionsvorrichtung (10) beweglich an der landwirtschaftlichen Maschine angeordnet ist.

12. Landwirtschaftliche Maschine nach einem der Ansprüche 6 bis 11,
**dadurch gekennzeichnet, dass** die mechanische Detektionsvorrichtung (10) schwenkbar an der landwirtschaftlichen Maschine angeordnet ist.

13. Landwirtschaftliche Maschine (1) nach einem der vorhergehenden Ansprüche,
**dadurch gekennzeichnet, dass** die landwirtschaftliche Maschine ein Fahrtrichtungs-Ermittlungselement (5) zum Ermitteln der Fahrtrichtung der landwirtschaftlichen Maschine umfasst.

14. Landwirtschaftliche Maschine nach den Ansprüchen 11 und 13,
**dadurch gekennzeichnet, dass** die mechanische Detektionsvorrichtung (10) mit Hilfe von Daten von dem Fahrtrichtungs-Ermittlungselement (5) bewegbar ist.

## Revendications

1. Machine agricole (1) destinée à effectuer une opération agricole, en particulier le traitement des cultures, la machine agricole étant munie d'un dispositif agricole mobile (2) pour effectuer l'opération agricole, **caractérisée en ce que** la machine agricole est munie d'un élément de détection (10) pour détecter une force agissant sur l'élément de détection et pour émettre un signal de détection en fonction de la force détectée, d'un élément de protection (4) pour protéger le dispositif agricole mobile, et d'un élément de déplacement (7) pour déplacer, en fonction du signal de détection, le dispositif agricole (2) et l'élément de protection l'un par rapport à l'autre.

2. Machine agricole selon la revendication 1,
**caractérisée en ce que** la machine agricole est une machine agricole (1) autonome.

3. Machine agricole (1) selon la revendication 1 ou 2, **caractérisée en ce que** l'élément de déplacement entraîne l'élément de protection (4) dans une position active dans laquelle l'élément de protection protège le dispositif agricole mobile (2) si le signal de détection indique qu'un objet pousse l'élément de détection (10), et **en ce que** l'élément de déplacement (7) entraîne l'élément de protection dans une position inactive dans laquelle l'élément de protection dégage le dispositif agricole mobile (2) si le signal de détection indique que l'élément de détection n'est en contact avec aucun objet.

4. Machine agricole (1) selon la revendication 1 ou 2, **caractérisée en ce que** l'élément de déplacement (7) entraîne le dispositif agricole (2) dans une position active dans laquelle l'élément de protection (4) protège le dispositif agricole mobile si le signal de détection indique qu'un objet pousse l'élément de détection (10), et **en ce que** l'élément de déplacement (7) entraîne le dispositif agricole (2) dans une position inactive dans laquelle l'élément de protection dégage le dispositif agricole mobile si le signal de détection indique que l'élément de détection n'est en contact avec aucun objet.

5. Machine agricole (1) selon l'une quelconque des revendications précédentes, **caractérisée en ce que** l'élément de déplacement est un élément de déplacement hydraulique (7).

6. Machine agricole (1) selon l'une quelconque des revendications précédentes, **caractérisée en ce que** l'élément de détection comprend un dispositif de détection mécanique (10).

7. Machine agricole (1) selon la revendication 6,
**caractérisée en ce que** le dispositif de détection mécanique (10) comprend un peigne.

8. Machine agricole (1) selon la revendication 6 ou 7, **caractérisée en ce que** le dispositif de détection mécanique (10) comprend un rouleau avec des tâteurs.

9. Machine agricole (1) selon la revendication 6 ou 7 ou 8, **caractérisée en ce que** le dispositif de détection mécanique (10) comprend un support avec des tâteurs.

10. Machine agricole (1) selon l'une quelconque des revendications 6 à 9, **caractérisée en ce que** le dispositif de détection mécanique (10) comprend un bras avec un tâteur (12).

11. Machine agricole (1) selon l'une quelconque des revendications 6 à 10, **caractérisée en ce que** le dispositif de détection mécanique (10) est disposé de manière mobile sur la machine agricole.

12. Machine agricole selon l'une des revendications 6 à 11, **caractérisée en ce que** le dispositif de détection mécanique (10) est disposé de manière pivotante sur la machine agricole.

13. Machine agricole (1) selon l'une quelconque des revendications précédentes, **caractérisée en ce que** la machine agricole comprend un élément de détermination de sens de déplacement (5) pour déterminer le sens de déplacement de la machine agricole.

14. Machine agricole selon les revendications 11 et 13, **caractérisée en ce que** le dispositif de détection mécanique (10) peut se déplacer à l'aide de données provenant de l'élément de détermination de sens de déplacement (5).
